# EUROPEAN PATENT SPECIFICATION

(11) **EP 0 793 079 B1**
(45) Date of publication and mention of the grant of the patent: **11.06.2003**
(21) Application number: 97200491.5
(22) Date of filing: 20.02.1997
(51) Int. Cl.: G01D 5/26, G01B 9/02

(54) **Fiber coupled interferometric displacement sensor**
Fiberoptisch-gekoppelter interferometrischer Sensor
Capteur de déplacement interférométrique à couplage par fibre optique

(30) Priority: 29.02.1996 US 610091
(43) Date of publication of application: 03.09.1997
(73) Proprietor: THE BOEING COMPANY, Seattle, Washington 98124-2207 (US)
(72) Inventor: Bell, John A., Issaquah, WA 98027 (US); Capron, Barbara A., Issaquah, WA 98029 (US); Pond, Charles Ray, Des Moines, WA 98198 (US); Breidenbach, Thomas S., Maple Grove, MN 55369-7666 (US); Leep, David A., Seattle, WA 98198 (US)
(74) Representative: Land, Addick Adrianus Gosling

(56) References cited:
- EP-A- 0 289 225
- EP-A- 0 514 579
- EP-A- 0 689 030
- DE-A- 4 031 291
- US-A- 3 881 823
- US-A- 4 912 530
- US-A- 4 958 929
- US-A- 5 270 793

## Description

### BACKGROUND OF THE INVENTION

### FIELD OF THE INVENTION

The present invention relates generally to instruments for measuring displacement (change of an object's position), including sensors for measuring force, pressure, or other physical quantities that can be determined from the displacements they cause in suitable transducers, and more particularly to optical interferometers for measuring displacement with high resolution and accuracy.

### DISCUSSION OF THE PRIOR ART

The standard instrument for precise accurate displacement measurements is the optical heterodyne interferometer. Such an interferometer uses coherent light of two frequencies. Hence it requires two lasers, or one laser that emits two frequencies, or a single-frequency laser plus one or two optical frequency shifters. Because of the size and heat load of these elements, the two-frequency light source is usually housed separately from the interferometric displacement-sensing optics (hereinafter called the sensor head). Generally, the light source provides light to one or a few sensor heads by way of collimated beams through free space. As a result, each sensor head must be aligned with its light-supply beam, and any travel of the sensor head during use must be along that beam path.

Fiber-coupled displacement sensors using interferometers of other types are known, but these sensors are less precise than heterodyne interferometers.

### PRIOR ART AND PATENT LITERATURE

The following patents are representative of fiber coupled interferometers for measuring the distance or displacement:

U.S. Patents to Cole et al. (5,094,534) and Ulrich (4,596,466) are illustrative of low-coherence interferometers. The accuracy advantage of conventional (high-coherence) interferometry for measuring displacements comes from using light of a precise wavelength as an extremely uniform and fine yardstick. These low-coherence systems use light only to help make a local copy of a remote displacement. Given time, the copying can be done very precisely, as these patent references emphasize, but measurement of the local displacement falls far below the speed/range/accuracy class of conventional interferometry. These systems are immune to fiber length variations, but work only in low-coherence light.

The following interferometers all utilize high coherence light:

U.S. Patent No. 5,106,192 to Tucker et al. is a system of several interferometers in a lower accuracy class than the system in accordance with the present invention, being intended for ranging to optically rough surfaces, as opposed to mirrors or retroreflectors. (In rough-surface interferometry, one measures interferometric phase from the same spot on the same object at two or more optical wavelengths. Approximate range is computed from the change of this phase with laser wavelength, not from the absolute phase at any one wavelength. Any one phase reading by itself is uninformative, because the illuminated spot on the target surface may contain height variations on the order of a half-wavelength. Range precision is typically 100 to 1000 times less than in conventional interferometry, about the ratio of the mean wavelength to the system in accordance with the present invention, the spread of wavelengths employed.) The system uses fiber in critical paths, but fiber length variations are not discussed.

Optical heterodyning is used to allow multiplexing: several interferometers at different wavelengths operate simultaneously through the same fiberoptic links, and this multiplexing is based on heterodyne-frequency separation, not on laser-wavelength separation. Thus, several lasers are used here to measure one object, whereas in the system according to the present invention, several objects can be measured with one laser.
The following interferometers concern smooth reflectors instead of rough surfaces:

U. Minoni, "Fiber-stress-insensitive interferometric setup for displacement measurements," *Optics Letters,* vol. 17, pp. 1382-1384, (1 Oct. 1992). U. Minoni is illustrative of a single-frequency interferometer that measures two phases one quarter-cycle apart. (One optical fiber is used not only for the source light but also for both photo detectors, all three paths being non critical.) In principle, such a two-phase single-frequency interferometer can get the same displacement information as a two-frequency interferometer, by dealing with a complex-valued baseband signal instead of an equivalent real-valued bandpass signal. In practice, handling complex baseband signals is generally more difficult and more subject to noise and drift (See: N. Bobroff, "Recent advances in displacement measuring interferometry," Measurement Science and Technology, vol. 4, pp. 907-926; 1993), because this case requires calibration and stability of electronic gains and offsets. The highest accuracy is easier to maintain with the bandpass signals of two-frequency interferometers.

The remaining interferometers are all two-frequency types. (Sources and signal-processing details differ, such standard techniques being interchangeable.) Moreover, they are all fiber-coupled in the same way: via the two polarization modes of one polarization-preserving fiber. Thus, fiber length variations affect them all, and they all use double interferometers of various forms to cancel these effects at the final output. Though the sensor forms differ, they all have the same intrinsic light efficiency (ignoring excess losses in components) and would permit source-sharing among multiple sensors to the same extent, though this possibility is not always mentioned.

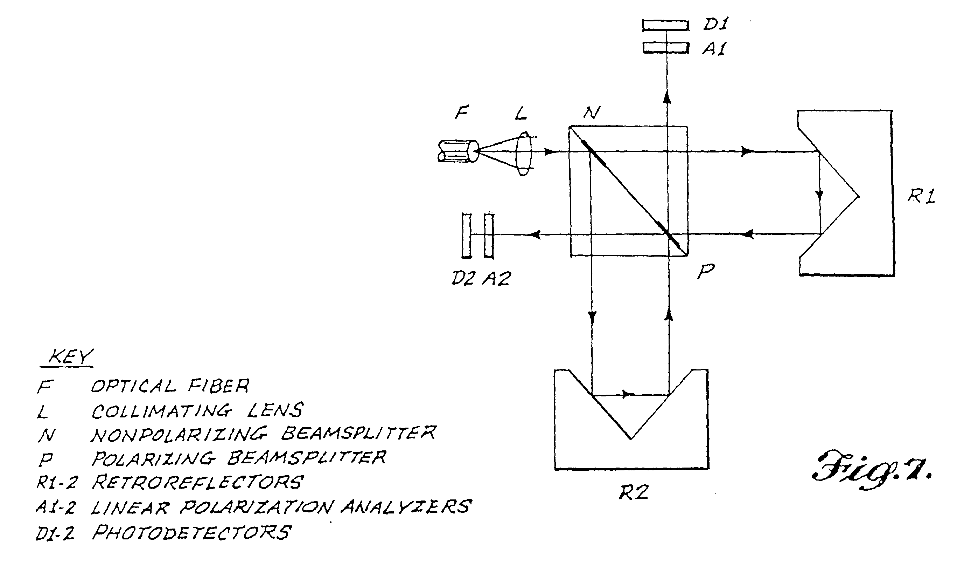

F. Farahi and D. A. Jackson, "A fiber optic interferometric system for surface profiling, *"Review of Scientific Instruments,* vol. 61, pp. 753-5 (Feb. 1990). A pseudo heterodyne technique is described, in which signal processing makes up for some economies in the light source. Again, this source (when accompanied by the appropriate signal processing) is interchangeable with the others. This sensor and that shown in U.S. Patent No. 5,274,436 to Chaney are similar. In U.S. Patent No. 5,274,436 target motion is sensed in only one instead of both interferometers. This "single-ended" arrangement has half the sensitivity of the "push-pull" configuration according to the present invention. Also, the critical portion of the interferometer has more optical parts and less symmetry than in the system according to the present invention (see figures 6 and 7 of the present invention hereinafter described). This may make it harder to build to a given accuracy. One source of phase error is lateral motion of the reflectors combined with wavefront aberration. (Even good optics can have 0.1-wavelength aberrations, and some applications, including that in the system according to the present invention, involve considerable lateral motion.) The system according to the present invention has first-order cancellation of this effect because of its push-pull symmetry, but the system of Chaney does not.

It should be noted that optical beams returning from the reflector undergo polarization manipulations (based on reversal of circular polarization by planar or cube-corner reflectors) in order to gain separation from the outbound beams, with which they spatially overlap. This overlap results from using planar mirrors or centered retroreflectors. In the system according to the present invention, the returning beams are already spatially separate from the outbound ones, since the cube-corner retroreflectors are illuminated off-center. This spatial separation allows the system of the present invention hereinafter described to use the polarization coordinate to produce a symmetrical push-pull action. It also allows the cube-corner's joints to be kept out of the beam path for highest accuracy (See N. Bobroff, supra.)

A further reference representative of the prior art is U.S. Patent No. 4,958,929 to Kondo which shows a push-pull configuration which is more complicated and less symmetrical in form than the present system hereinafter described. The embodiment of Kondo's Figure 6 lends itself to source-sharing. The present system in contrast does not use the 90-degree polarization rotations specified therein. The present system uses two additional components: the diagonal polarization analyzers prior to the photo detectors (A1-2 in figures 6-7 hereinafter shown in the drawings). These additional components are in the non critical portion of the interferometer, and are also inexpensive. They also provide a means of adjusting the intensity balance; this may be useful for nulling certain error contributions, such as the ones arising from polarization mixing (see N. Bobroff supra.)

In the system of U.S. Patent No. 4,958,929 to Kondo, at only one of the two reflectors, two oppositely-polarized beam components trade places (by circular-polarization reversal or other unspecified means). The beam exchange is needed somewhere, but putting it here entails at least one additional optical component in a critical path, and breaks the symmetry. The suggested method sends circular polarization to one reflector and linear to the other; in the presence of realistic imperfections in reflectors and waveplates, this may affect accuracy. Using the waveplate also makes the polarization states temperature-dependent (see Bobroff, supra.). In the present system (see figures 6-7 of the drawings of this application), the analogous beam exchange (farther downstream, at the beam-beamsplitter) does not require waveplates. The critical portion of the interferometer has a simplicity and symmetry unmatched by the other systems of the prior art herein above referenced, thereby minimizing susceptibility to component imperfections and yielding best results.

A further reference representative of the prior art is the European Patent No. 0 514 579-A1 to Wilkening which provides a heterodyne interferometer arrangement, comprising a source of coherent light at two wave lengths and two orthogonal polarizations; a polarizing beamsplitter, a non-polarizing beamsplitter and a first and a second retroreflector, configured so as to form a heterodyne interferometer which outputs a first and a second beam; a first and second linear polarization analyzer positioned as to receive said first and said second beams having their respective polarization access oriented diagonally to the polarizations of light in said output beams, and a first and a second photodetector for detecting light transmitted by said analyzers. The arrangement however shows insufficient symmetry and simplicity.

Further reference U.S. Patent No. 4,912,530 to Bessho provides a heterodyne interferometer as described in EP 0 514 579-A1 comprising a source of coherent light at two wave lengths, a first and a second polarizing beamsplitter, a first and a second reteroreflector, polarization analyzers, and photodetectors. This system is also complicated and shows little symmetry.

### SUMMARY OF THE INVENTION

The present invention adds certain advantages of fiber optics (thermal isolation, unobstructed access to small or distant places, connection across movable joints or flexible structures without loss of alignment) to the practice of heterodyne interferometry (widely used for precision measurement of displacement or distance), while retaining the accuracy for which the heterodyne method is valued. Fiber optics also permits greater freedom for several interferometers to share one light source. A further feature is that the symmetrical form of the interferometer utilized to cancel environmental effects in the optical fibers also desensitizes the system to some other optical sources of uncertainty. Finally, remote interferometric sensing of displacement in the present system enables remote sensing of force, pressure, or other quantities that can be converted to small displacements.
to clarify the role of the fiber optics, consider a heterodyne interferometer to consist of (1) the requisite two-frequency coherent light source, (2) a sensing head that defines the measurement axis, and (3) the photo detection system. It is straightforward to separate (2) and (3) by a fiberoptic link, allowing the optomechanics and optoelectronics to operate in different thermal and electrical-noise environments. All the systems under discussion can use fiber optics in this role, and instruments with this feature are commercially available. The present system, however is a special form of heterodyne interferometer that permits a fiber-optic link to supply light from (1) to (2), powering one or more sensor heads from a remote laser, and allowing more flexibility in placement of the sensors. Only this latter use of fiber optics will be discussed further.

Some basic design considerations in fiber-coupled interferometry are: (1) If two optical beams interfere, some part of the optical path is non critical as to length if both beams traverse it but critical if only one of the beams does; (2) Optical fibers are subject to changes in effective length (with temperature and bending stress, for example) that are not negligible in a critical path. In heterodyne interferometry, further considerations are: (3) the sensors need light of two frequencies; (4) it is not convenient to separate or derive one frequency from the other within each sensor head; (5) using separate supply paths for the two frequencies makes both paths critical. In this situation, polarization-maintaining fiber must be considered, which can carry two lightwaves independently in separate polarization modes. Still, the difference in optical lengths between these two modes can vary by more than the tolerance, which may be less than 0.01 wavelength. (Typical wavelengths are in or near the visible range, on the order of 1 micron.)

Fiber-coupled heterodyne interferometry therefore requires a novel form of interferometer that takes fiber length variations into account in accordance with the present system herinafter described in detail.

### DISTINCTIVE FEATURES OF THE INVENTION

This invention is a precision displacement measuring device using optical heterodyne interferometry differing from hereinbefore described prior heterodyne interferometers in that:
(1) The necessary two-frequency laser light is brought from the light source to the displacement-sensing head through an optical fiber instead of the usual open-beam optics.
(2) The interferometer has two outputs with complementary symmetry: The response to displacement appears in a differential mode, distinguishable from unwanted effects, including those of changing conditions in the light supply fiber, which appear in the common mode.

Further features and advantages of this invention are:
(1) The sensor head needs no alignment with the light source, and only a fiber-optic connection with it. Thus the sensor head can be placed on an object undergoing arbitrary motion, or in places where space or access is very limited.
(2) The light supply path is totally enclosed, minimizing laser safety concerns.
(3) One light source can conveniently serve many sensor heads.
(4) Measurement sensitivity is improved, since the displacement to be sensed yields twice the usual interferometric phase change for a given laser wavelength.

These and other objects, features and advantages of the present invention can be seen by reference to the drawings which illustrate, for purpose of example only, several embodiments of the present invention wherein:
FIG. 1 is an optical schematic diagram of a two-frequency laser light source connected by optical fiber to several hereinafter described sensor heads;
FIG. 2 is an optical schematic diagram of an embodiment of sensor head utilizing standard optical components to illustrate principles of the present invention;
FIG. 3 is an optical schematic diagram of a preferred configuration of the present sensor head utilizing a custom optical subassembly for better alignment and stability;
FIG. 4 is an optical schematic diagram of a simpler configuration of the sensor head, having less sensitivity and symmetry, while still retaining the advantageous features of fiber coupling;
FIG. 5 is an optical schematic diagram of a simplification of the sensor head shown in FIG. 2 having the same distinctive features and advantages but utilizing fewer components;
FIG 6 is an optical schematic diagram of a preferred form of sensor head utilizing a custom optical subassembly which is a simplified version of the sensor head shown in FIG. 3 while providing better alignment and stability than the sensor head shown in FIG. 5; and
FIG. 7 is an optical schematic diagram of the system of FIG. 6, however utilizing cube-beamsplitter halves instead of optical flats.

### DETAILED DESCRIPTION OF THE PREFERRED EMBODIMENTS

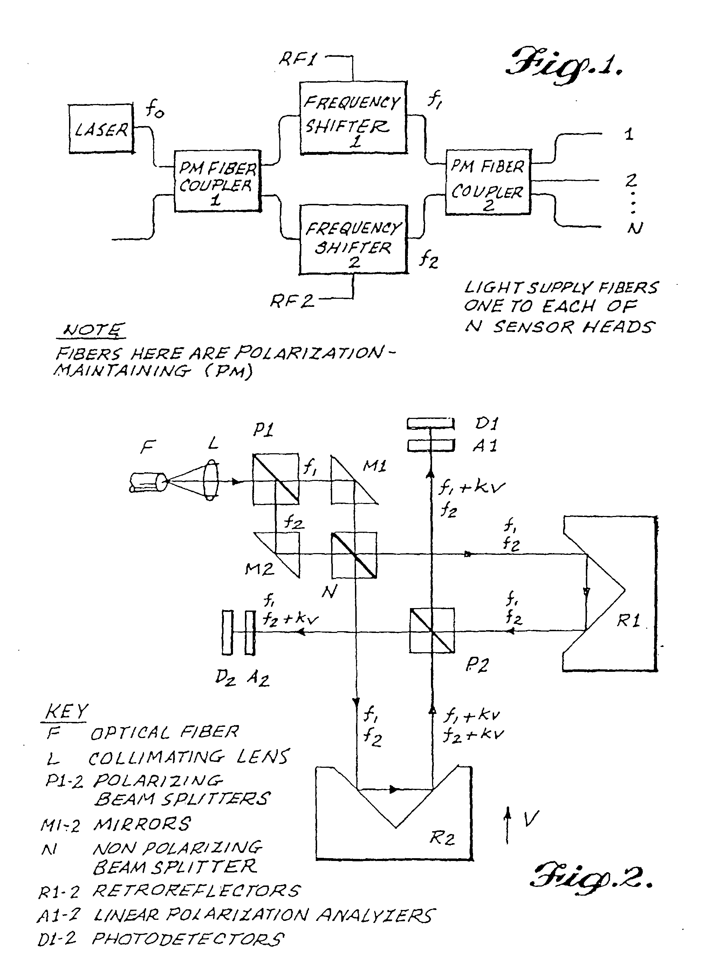

A convenient light source arrangement is shown in figure 1 which uses one stable single-frequency laser and two frequency shifters, each receiving roughly half of the laser output. Acousto-optic cells are a good choice for the frequency shifters, although other types are also known. These are driven by electrical signals of frequencies RF1 and RF2, typically between 20 and 100 MHz, which determine the magnitude of the frequency shift. The cells can be designed to provide either upward or downward frequency shifts. Taking both shifts in the same direction, the difference between the output optical frequencies f1 and f2, typically desired to be in a range 0.2 to 20 MHz, is the same as the difference between the chosen RF1 and RF2. All the fiber-optic connections and the fiber couplers, which divide or combine light waves, are made with PM fiber. At both ends of every fiber, the fiber polarization axes are oriented according to the polarization the light has upon entering or needs to have upon leaving the fiber. In particular, the two input fibers to coupler 2 are oriented so that optical frequency components f1 and f2 enter different fiber polarization modes. Coupler 2 then distributes both of these frequency components more or less equally to all N of its outputs. Each output receives one frequency component in each of its two polarization modes, as required.

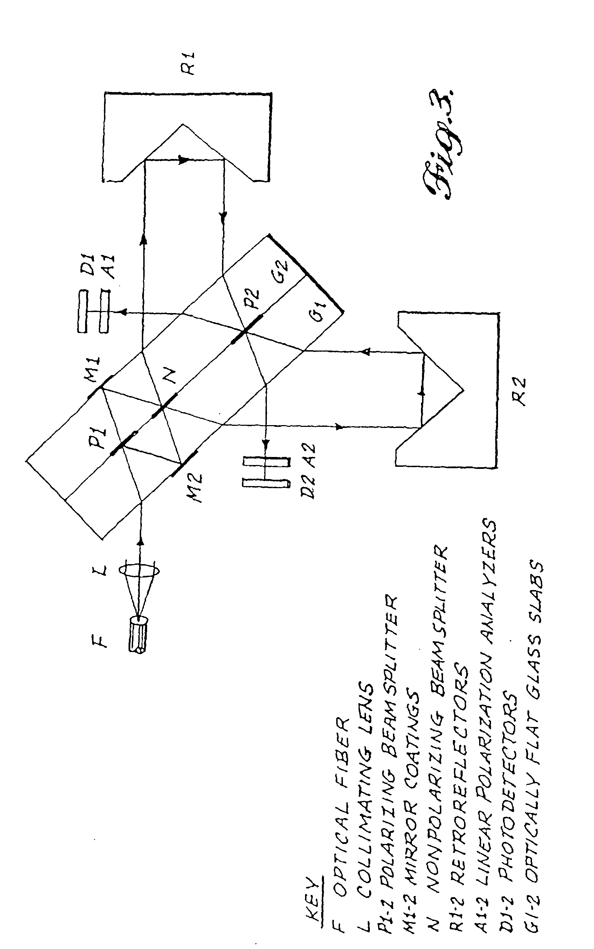

Figure 2 is illustrative of how the sensor works. Light with the properties just described arrives through supply fiber F, which is of PM type. At the output end of this fiber, its polarization axes, and hence those of the emerging light, are oriented parallel and perpendicular to the plane of the page. The light beam diverges from the fiber until it is collimated at a convenient diameter by the lens L. Beyond this lens the beam remains substantially collimated over the rest of the path shown, so for simplicity only the central ray is drawn.

The polarizing beamsplitter P2 separates the light into its two frequency components by virtue of their different polarizations. For definiteness, let f1 refer to the s-polarized component, which undergoes reflection toward mirror M2. Let us also suppose that f1 is the larger of the two frequencies. The mirrors reflect their respective beams toward nonpolarizing beamsplitter N (from different directions), where each beam undergoes an approximately equal power split between the two outgoing paths leading to retroreflectors R1 or R2. The latter two beams are again composites of two frequency and polarization components as marked. Now consider what happens if R1 is fixed in position and R2 is moving at speed v in the direction indicated: each beam component reflecting from R2 undergoes a frequency shift proportional to v. (The proportionality constant is 2 times the reciprocal of the laser wavelength.) The final polarizing beamsplitter P2 again reflects the F2 beam component (as P1 did) because they are still s-polarized; the f1 beam components go straight through (as they did through P1) because they are still p-polarized. As a result, the composite beams leaving P2 toward the photodetectors are paired differently than those entering. Each detector receives one Doppler-shifted beam component from R2 and one unshifted one from R1.

The photodetectors D1 and D2 are preceded by polarization analyzers A1 and A2. As in a typical heterodyne interferometer (Ref. 1), these analyzers are oriented diagonally to transmit roughly half of each polarization component in the incident beams. (It makes little difference which of two diagonals are used.) Each of the transmitted beams still has two frequency components (which have traveled different paths) but these are now in the same polarization state and therefore undergo optical interference. The interferometric phase, being the phase difference between the interfering beam components, is time-varying according to the difference frequency.

At photodetector D1, this difference frequency is (f1 - f2) + kv, while at D2 it is (f1 - f2) - kv. Thus the hypothetical motion of one retroreflector is seen to shift the frequencies of the interferometer's two output signals in opposite directions. If the moving retroreflector subsequently comes to rest, clearly its change of position will have shifted the two interfereometric phases also in opposite directions, as was claimed at the outset. It is also clear that any phase drifts affecting optical frequencies f1 or f2 before they enter the sensor head (actually, anywhere before beamsplitter N) affect both interferometric phases equally in the same direction. Thus any such phase drifts, which may be expected to occur in the optical fiber F, shift the two interferometric phases equally in the same direction, and do not affect the differential phase.

The electric signal processing task for these interferometers is similar to that of ordinary heterodyne interferometers, except that there are two interferometric phases subject to change with displacement instead of just one, and the quantity of interest is the phase difference between them. Many suitable methods of electrical phase measurement are known. (See Ref. 1)

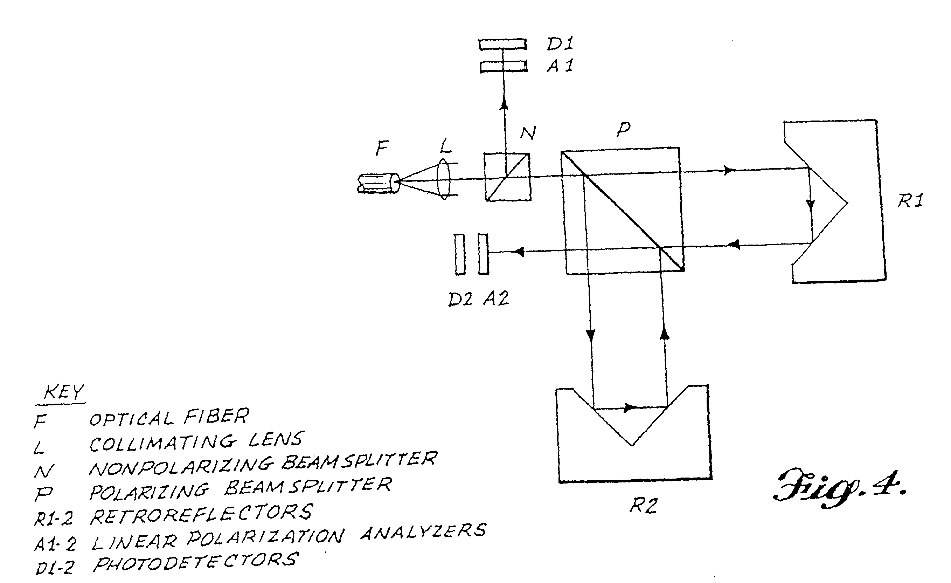

Now that the basic principles have been explained in terms of familiar optical components, Figure 3 shows an improved configuration of the sensor head. There one custom optical component substitutes for the beamsplitters and mirrors of Figure 2, so that the optical alignment is built in. This component is fabricated from two optically flat glass slabs. Before the slabs are assembled together, optical coatings are deposited where needed to form the N and P beamsplitters. Similarly, mirrors M1 and M2 are formed by reflective coatings. Preferably, the rest of the outer surface is antireflection coated.

Several kinds of two- frequency optical sources are known. The one shown in Figure 1 was chosen as economical for a particular instrumentation problem involving 24 sensors. It is possible to use two lasers and no frequency shifters. In that case, some form of automatic control of the laser frequency difference (Ref. 2) would be convenient, but such control would not have to be precise, since a gradual change of (f1-f2) causes no differential phase error as long as the electrical signal frequencies remain usable by the signal processor. Laser systems that emit two frequencies of controlled frequency separation and orthogonal linear polarizations along a common beam path are also known (Ref. 3). To fiber-couple such a light source, only one input of coupler 2 would be needed, and the coupler itself could be replaced by a single fiber if only one sensor head was to be served. Alternatively, for applications that do not require the flexibility of the light-supply fiber, free-space beams can be used to convey light from a conventional two-frequency light source to one or more sensor heads of the form shown in Figure 2 or subsequent ones. (In that case, fiber F and lens L in the Figures would be omitted.) The push-pull symmetry would remain.

It is also known that the photodetectors can be located remotely from the interferometer; this allows an amplifier to be close to the detector without heating the sensor head. In this variant, D1 and D2 in Figures 2-4 represent not the detectors themselves but light collectors fiber-coupled to remote detectors. A light collector could be simply a lens focused onto the end of the detector fiber, the reverse of the arrangement F-L in the figures. An important difference is that the detector fibers can be of the multimode type, with much larger core diameter than the supply fiber F; this eases alignment of the light collector. An aperture stop before the lens may be helpful in obtaining good heterodyne efficiency.

Further, it is known that the sensitivity of displacement-sensing interferometers can be increased by reflector arrangements that send the light on more than one trip to the position to be sensed. Such sensitivity multiplier schemes can be used to the same advantage with the present fiber-coupled sensor head.

If optical imperfections lead to unequal intensities of the two polarization components incident on analyzers A1 or A2 in the figures, the inequality can be compensated by adjusting the orientation of the analyzer in favor of the weaker beam.

Displacement of either retroreflector R1 or R2 can be sensed, or differential motion between them. The light beams connected with one or both retroreflectors can be folded by auxiliary mirrors to redirect axis of displacement sensitivity.

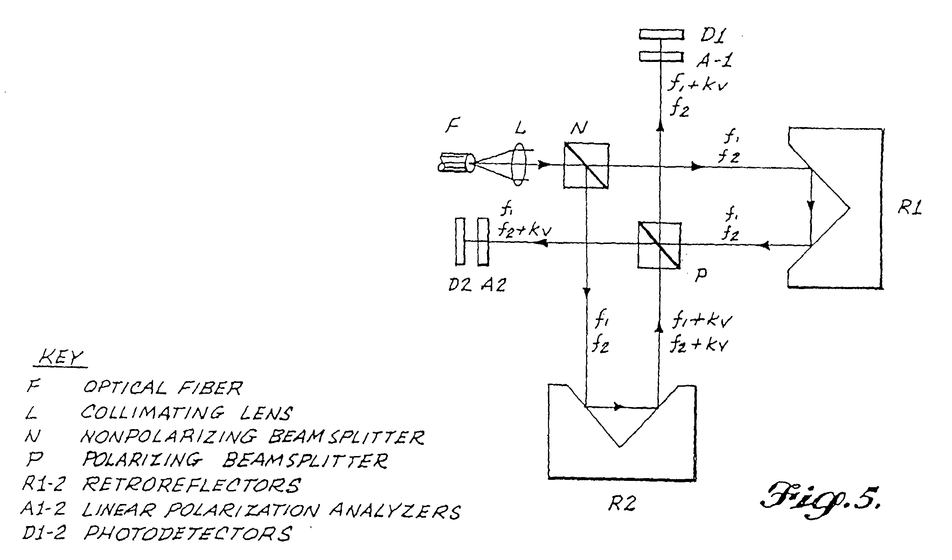

Figure 4 shows a possible variant in which only one interferometric phase is sensitive to displacement, but common-mode phase drifts can still be rejected with differential-mode signal processing as before, so that the benefits of fiber coupling are retained.

### IMPROVEMENTS

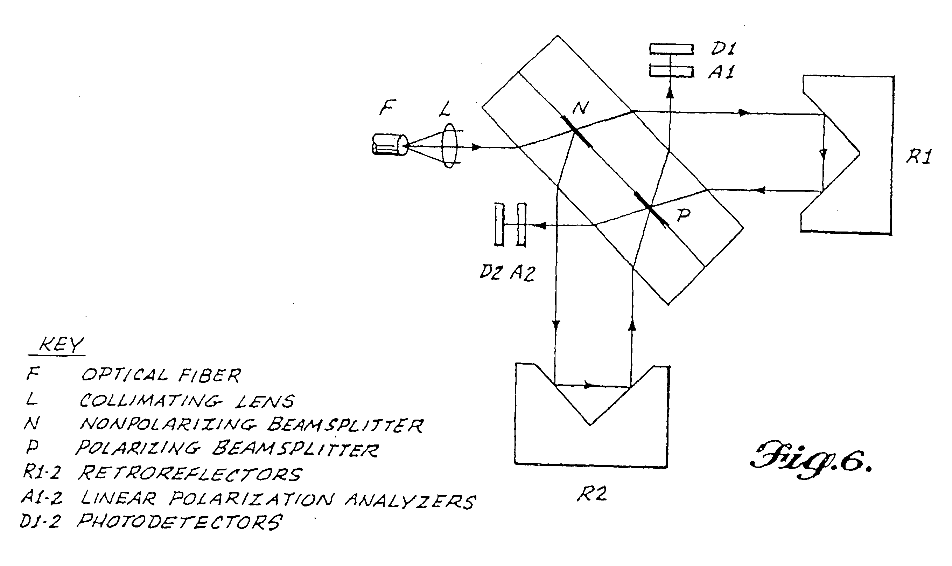

Configurations of the sensor head optics have been found that provide the same distinctive features and advantages over prior art as Figures 2 and 3 configurations, but utilize fewer components. These simplified configurations are shown in the configurations of Figures 5-7.

### PRINCIPLES OF OPERATION

There is no change to the light source hereinbefore described, so its description will not be repeated.

The description of the sensor for Figure 5 is the same as previously described up through the collimating lens L. At this point the collimated beam contains two frequency components in separate polarization modes.

In Figure 5, the sensor first differs from that of Figure 2 in the following manner. The, collimated beam passes through non-polarizing beamsplitter N. There the s- and p-polarized components of the beam each undergo an approximately equal power split between the two outgoing paths leading to retroreflectors R1 or R2. Thus the outgoing beams are still composites of two frequency and polarization components as marked. As before, let f1 refer to the p-polarized and f2 the s-polarized component where f1 is the larger of the two frequencies. Again as before, if R1 is fixed in position and R2 is moving at speed v, each beam component reflecting from R2 undergoes a frequency shift proportional to v. The polarizing beamsplitter P reflects the f2 beam components because they are s-polarized and the f1 beam components go straight through because they are p-polarized. Once again, each photodetector receives one Doppler-shifted beam component from R2 and one unshifted one from R1.

From here on, the sensor description is identical to that previously described. Photodetectors D1 and D2 are again preceded by polarization analyzers A1 and A2 which allow the resulting beams to interfere. Again the difference frequency at D1 is (f1-f2) +kv while at D2 it is (f1-f2)-kv. The effect of retroreflector motions is the same as before and the resulting change of position again causes the two interferometric phases to shift in the opposite directions. Once again, any phase drifts occurring prior to beamsplitter N do not affect the differential phase, and there is no difference in the electrical signal processing task from that previously described.

Now that the basic principles have been explained in terms of basic optical components, Figure 6 shows an improved manner of configuring the sensor head. One custom optical component substitutes for the beamsplitters of Figure 5, so that the optical alignment is built in. This component is fabricated from two optically flat glass slabs. Before the slabs are assembled together, optical coatings are deposited where needed to form the N and P beamsplitters. Figure 7 shows an alternative form built from cube beamsplitter halves instead of optical flats. In all the figures, unwanted reflections from optical surfaces encountered at normal incidence can be rejected by tilting the components slightly away from normal incidence (not shown) or minimized by antireflective coatings as usual.

## Claims

1. An apparatus for measuring displacement comprising:
- a source of coherent light at two wavelengths and two orthogonal polarizations ;
- a polarizing beamsplitter, a nonpolarizing beamsplitter, and a first and a second retroreflector, configured in relation to one another so as to form a heterodyne interferometer which outputs a first and a second output beam;
- a first and a second linear polarization analyzer positioned so as to receive said first and said second output beams respectively and to transmit a portion of light arriving in each of the two orthogonal polarizations in each of said output beams;
- a first and a second photodetector for detecting light transmitted through said first and said second polarization analyzer, respectively,
**characterized in that**
a polarization maintaining optical fiber transmits said light from said source onto an input path of said interferometer.

2. The apparatus of claim 1 wherein said heterodyne interferometer further comprises a second polarizing beamsplitter and a first and second mirror surface.

3. The apparatus of claim 2 wherein said means for receiving light includes a lens positioned so as to collimate light exiting said optical fiber onto an input path of said interferometer.

4. The apparatus of claim 1, 2 or 3 wherein said polarization analyzers comprise a first and a second polarizing filter having their respective polarization axes oriented substantially diagonally to the polarizations of light in said output beams.

5. The apparatus of claim 1 wherein said interferometer comprises a first triangular prism of optically transparent material which is joined to a second triangular prism of optically transparent material along one face, optical coatings on said one face of said first prism configured so as to form said polarizing beamsplitter and said nonpolarizing beamsplitter.

6. The apparatus of claim 5 wherein said first and said second joined prisms form an optical cube sliced along one diagonal.

7. The apparatus of claim 1 wherein said interferometer comprises a first slab of optically transparent material which is joined to a second slab of optically transparent material along one side, optical coatings on said one side of said first slab configured so as to form said first and said second polarizing beamsplitter and said nonpolarizing beamsplitter, and reflective coatings on opposite sides of said first and said second slabs configured to form said first and said second mirrors.

8. The apparatus of claims 5 or 7 wherein the exterior surfaces of said joined slabs or prisms respectively are coated with antireflection coatings.

9. The apparatus of claim 1 further comprising a first and a second optical fibre which transmit light from said first and second polarization analyzers to said first and second photodetectors, respectively.

## Patentansprüche

1. Vorrichtung zum Messen von Verschiebung umfassend:
eine Quelle kohärenten Lichts mit zwei Wellenlängen und zwei senkrechten Polarisationen;
einen polarisierenden Strahlteiler, einen nicht polarisierenden Strahlteiler und einen ersten und einen zweiten Retroreflektor, die derart zueinander angeordnet sind, dass sie ein Heterodyn-Interferometer bilden, welches einen ersten und einen zweiten Ausgangsstrahl ausgibt;
einen ersten und einen zweiten linearen Polarisationsanalysator, die derart angeordnet sind, um die ersten beziehungsweise zweiten Ausgangsstrahlen zu empfangen und einen Teil des in jedem der zwei senkrechten Polarisationen in jedem der Ausgangsstrahlen ankommenden Lichts weiterzuleiten;
einen ersten und einen zweiten Fotodetektor zum Erfassen eines durch den ersten beziehungsweise zweiten Polarisationsanalysator weitergeleiteten Lichts,
**dadurch gekennzeichnet,**
**dass** eine die Polarisation beibehaltende optische Faser das Licht von der Quelle zu einem Eingangspfad des Interferometers weiterleitet.

2. Vorrichtung nach Anspruch 1, wobei das Heterodyn-Interferometer weiterhin einen zweiten polarisierenden Strahlteiler und eine erste und zweite Spiegeloberfläche umfasst.

3. Vorrichtung nach Anspruch 2, wobei die Mittel zum Empfangen eines Lichts eine derart positionierte Linse beinhalten, um ein aus der optischen Faser herauskommendes Licht auf einen Eingangspfad des Interferometers zu richten.

4. Vorrichtung nach Anspruch 1, 2 oder 3, wobei der Polarisationsanalysator einen ersten und einen zweiten Polarisationsfilter besitzt, wobei deren jeweiligen Polarisationsachsen im Wesentlichen diagonal zu den Lichtpolarisationen in den Ausgangsstrahlen orientiert sind.

5. Vorrichtung nach Anspruch 1, wobei das Interferometer ein erstes dreieckiges Prisma eines optisch transparenten Materials umfasst, welches entlang einer Seitenfläche mit einem zweiten dreieckigen Prisma eines optisch transparenten Materials verbunden ist, wobei optische Beschichtungen auf der einen Seitenfläche des ersten Prismas angeordnet sind, um den polarisierenden Strahlteiler und den nicht polarisierenden Strahlteiler zu bilden.

6. Vorrichtung nach Anspruch 5, wobei die ersten und zweiten verbundenen Prismen einen entlang einer Diagonale aufgeschnitten optischen Würfel bilden.

7. Vorrichtung nach Anspruch 1, wobei das Interferometer eine erste Scheibe aus optisch transparentem Material umfasst, welche entlang einer Seite mit einer zweiten Scheibe aus optisch transparentem Material verbunden ist, wobei optische Beschichtungen auf der einen Seite der ersten Scheibe derart angeordnet sind, um den ersten und zweiten polarisierenden Strahlteiler und den nicht polarisierenden Strahlteiler zu bilden, und wobei reflektierende Beschichtungen auf gegenüberliegenden Seiten der ersten und zweiten Scheiben angeordnet sind, um den ersten und zweiten Spiegel zu bilden.

8. Vorrichtung nach Anspruch 5 oder 7, wobei die äußeren Oberflächen der verbundenen Scheiben beziehungsweise Prismen mit Antireflexionsbeschichtungen beschichtet sind.

9. Vorrichtung nach Anspruch 1, weiterhin eine erste und eine zweite optische Faser, welche Licht von den ersten und zweiten Polarisationsanalysatoren zu den ersten beziehungsweise zweiten Fotodetektoren weiterleitet, umfassend.

## Revendications

1. Dispositif pour mesurer un déplacement comprenant :
- une source de lumière cohérente possédant deux longueurs d'onde et deux polarisations orthogonales;
- un diviseur de faisceau avec polarisation, un diviseur de faisceau sans polarisation et des premier et second rétroréflecteurs, configurés selon une relation réciproque de manière à former un interféromètre hétérodyne qui délivre des premier et second faisceaux de sortie;
- des premier et second analyseurs de polarisation linéaire positionnés de manière à recevoir lesdits premier et second faisceaux de sortie respectivement et transmettre une partie de la lumière arrivant dans chacune des deux polarisations orthogonales dans chacun desdits faisceaux de sortie;
- des premier et second photodétecteurs servant à réaliser la détection d'une lumière transmise respectivement par lesdits premier et second analyseurs de polarisation,
**caractérisé en ce que**
une fibre optique de maintien de la polarisation transmet la lumière de ladite source à un trajet d'entrée dudit interféromètre.

2. Dispositif selon la revendication 1, dans lequel ledit interféromètre hétérodyne comprend en outre un second diviseur de faisceau avec polarisation et des première et seconde surfaces de miroir.

3. Dispositif selon la revendication 2, dans lequel lesdits moyens de réception d'une lumière inclut une lentille positionnée de manière à collimater la lumière sortant de ladite fibre optique sur un trajet d'entrée dudit interféromètre.

4. Dispositif selon la revendication 1, 2 ou 3, dans lequel lesdits analyseurs de polarisation comprennent des premier et second filtres de polarisation, dont les axes de polarisation sont orientés essentiellement en diagonale par rapport aux polarisations de la lumière desdits faisceaux de lumière.

5. Dispositif selon la revendication 1, dans lequel ledit interféromètre comprend un premier prisme triangulaire formé d'un matériau transparent du point de vue optique, qui doit être réuni à un second prisme triangulaire formé du matériau transparent du point de vue optique le long d'une face, des revêtements optiques situés sur ladite une face dudit premier prisme étant configurés de manière à former ledit diviseur de faisceau avec polarisation et ledit diviseur de faisceau sans polarisation.

6. Dispositif selon la revendication 5, dans lequel les premier et second prismes réunis forment un cube optique divisé le long d'une diagonale.

7. Dispositif selon la revendication 1, dans lequel ledit interféromètre comprend un premier barreau formé d'un matériau transparent du point de vue optique, qui est réuni à un second barreau formé d'un matériau transparent du point de vue optique, lelong d'un côté, des revêtements optiques situés sur ledit un côté dudit premier barreau et configuré de manière à former lesdits premier et second diviseurs de faisceau avec polarisation et ledit diviseur de faisceau sans polarisation, lesdits revêtements réfléchissants situés sur les côtés opposés desdits premier et second barreaux configurés pour former lesdits premier et second miroirs.

8. Dispositif selon la revendication 5 ou 7, dans lequel les surfaces extérieures desdits prismes réunis sont recouvertes respectivement de revêtements antiréfléchissants.

9. Dispositif selon la revendication 1, comprenant en outre les première et seconde fibres optiques qui transmettent la lumière depuis lesdits premier et second analyseurs de polarisation respectivement vers lesdits premier et second photodétecteurs.
